Europäisches Patentamt

European Patent Office

Office européen des brevets

(19)

(11) Veröffentlichungsnummer: **0 176 878**
**B1**

(12) **EUROPÄISCHE PATENTSCHRIFT**

(45) Veröffentlichungstag der Patentschrift: 16.05.90

(21) Anmeldenummer: 85111864.6

(22) Anmeldetag: 19.09.85

(51) Int. Cl.⁵: **G 01 S 7/62,** G 01 S 15/89,
G 10 K 11/00

(54) Ultraschall-Compound-Abtastung mit einem rotierenden Wandler.

(30) Priorität: 25.09.84 CH 4575/84

(43) Veröffentlichungstag der Anmeldung:
09.04.86 Patentblatt 86/15

(45) Bekanntmachung des Hinweises auf die
Patenterteilung:
16.05.90 Patentblatt 90/20

(84) Benannte Vertragsstaaten:
CH DE FR GB IT LI NL SE

(56) Entgegenhaltungen:
DE-A-2 719 130
GB-A-2 097 534
US-A-4 034 744
US-A-4 161 122
US-A-4 410 826

(73) Patentinhaber: KONTRON INSTRUMENTS
HOLDING N.V.
130 Schottegatwegoost
Willemstad Curacao (AN)

(72) Erfinder: Abbott, John Garnet, Dr.
Schwarzackerstrasse 58
CH-4303 Kaiseraugst (CH)
Erfinder: Burckhardt, Christoph Benedikt, Dr.
Rebgasse 14
CH-4132 Muttenz (CH)
Erfinder: Grandchamp, Pierre-André, Dr.
Loogstrasse 26
CH-4142 Münchenstein (CH)
Erfinder: Krummenacher, Peter
Bleumatthalde 12
CH-5264 Gipf-Oberfrick (CH)
Erfinder: Schlaepfer, Claude
Kirchstrasse 474
CH-4323 Wallbach (CH)

(74) Vertreter: Körber, Wolfhart, Dr. et al
Patentanwälte Dipl.-Ing. H. Mitscherlich Dipl.-
Ing. K. Gunschmann Dr.rer.nat. W. Körber
Dipl.Ing. J. Schmidt-Evers Dipl.-Ing. W. Melzer
Steinsdorfstrasse 10
D-8000 München 22 (DE)

# EP 0 176 878 B1

**Beschreibung**

Die Erfindung bezieht sich auf eine Ultraschall-Wandleranordnung für ein Ultraschall-Bildgerät nach dem Gattungsbegriff des Patentanspruchs 1 sowie ein Ultraschall-Bildgerät zur Erzeugung eines zusammengesetzten Querschnittbildes eines Körpers nach dem Compound-Scan-Verfahren.

Bei der abdominellen und geburtshilflichgynäkologischen Ultraschalldiagnostik sowie bei der Untersuchung von Körperweichteilen wird in der Regel im zweidimensionalen B-Bild-Verfahren gearbeitet. Hierbei wird eine zu untersuchende Region zeilenweise mit dem Ultraschall-Strahl abgetastet. Für die örtliche Verschiebung des Ultraschallstrahls, die zum Aufbau des Ultraschallbildes erforderlich ist, gibt es unterschiedliche technische Lösungen. Dabei unterscheidet man zwischen dem Compound-Scan-Verfahren, auch langsames B-Bild-Verfahren genannt, und dem Echtzeitverfahren, das auch schnelles B-Bild-Verfahren genannt wird.

Beim klassischen Compound-Scan-Verfahren wird ein Ultraschallwandler, der einen einzigen monolithischen Wandler enthält, unter Zwischenschalten eines Kopplungsmediums über die Haut geführt, wobei eine Kombination von Parallel- und Winkelverschiebung des Wandlers durchgeführt wird. Die jeweilige Stellung des Wandlers wird so auf elektrische Stellglieder übersetzt, daß im Bildanzeigegerät der Elektronenstrahl in der Richtung des jeweiligen Ultraschallstrahls abgelenkt wird. Auf diese Weise wird das Ultraschallbild Zeile für Zeile aufgebaut. Bei diesem Verfahren muß für die Bildanzeige ein Bildspeicher benutzt werden, da der Bildaufbau relativ langsam erfolgt und z.B. eine halbe bis etwa zwei Minuten pro Bild dauert. Die Vorteile des klassischen Compound-Scan-Verfahrens sind die folgenden:

1. Die Granularität ("speckle noise") des Bildes wird verringert. Dadurch werden Grautonunterschiede zwischen verschiedenen Gewebeteilen besser sichtbar und wird die Erkennbarkeit von Strukturen unterschiedlicher Gewebe wie z.B. Tumoren und Zysten verbessert.

2. Die Abbildung von Gewebe- und Organgrenzen wird verbessert. Da solche Grenzen die Ultraschallwellen spiegelnd reflektieren, liefert der Wandler ein Maximum an Echosignal, wenn der Ultraschallstrahl senkrecht auf die Grenzfläche einfällt. Die Wahrscheinlichkeit, daß diese Bedingung erfüllt wird, ist beim Compound-Scan-Verfahren groß, weil dabei der untersuchte Körper von einer Vielzahl verschiedener Richtungen mit Ultraschallwellenimpulsen bestrahlt wird.

Die Nachteile des oben beschriebenen, klassischen Compound-Scan-Verfahrens sind wie folgt:

1. Eine Echtzeitdarstellung von Bewegungsabläufen ist nicht möglich, da — bedingt durch den langsamen Bildaufbau — nur ein stehendes Speicherbild erzeugt werden kann, das vor einem neuen Bildaufbau gelöscht werden muß.

2. Der Zeitaufwand für die Untersuchung ist relativ groß.

3. Artefakte, die von Organbewegungen während des langsamen Bildaufbaus verursacht werden, können die Bildqualität erheblich verschlechtern.

4. Die erforderliche Ausrüstung und die Bedienungstechnik sind relativ aufwendig.

5. Insbesondere wenn der Wandler von Hand bewegt wird, ist die Bildqualität stark vom Geschick des Untersuchers abhängig. Um brauchbare Bilder zu erzeugen, ist daher eine geeignete Ausbildung des Untersuchers erforderlich. Bilder, die vom selben Gegenstand von verschiedenen Untersuchern aufgenommen werden, sind in der Regel — auch bei gleichwertiger Ausbildung/Erfahrung der Untersucher — verschieden.

Im Gegensatz zum klassischen Compound-Scan-Verfahren sind die sogenannten Echtzeitverfahren durch einen schnellen Bildaufbau gekennzeichnet. Durch mechanische oder elektronisch gesteuerte Abtastung kann jedes Bild in Sekundenbruchteilen erzeugt werden. Bei den Echtzeitverfahren werden Bildfolgefrequenzen erreicht, die größer als 15 Bilder pro Sekunde sein kann.

Unter den Geräten zur Durchführung von Echtzeitverfahren sind Geräte bekannt, die eine um eine Rotationsachse drehbare Anordnung von Ultraschallwandlern und eine Antriebsvorrichtung enthalten, mit der eine Rotationsbewegung der Wandleranordnung um die Rotationsachse durchführbar ist. Solche Geräte sind z.B. in der GB—A—2 097 534 und in der DE—A—27 19 130 beschrieben.

Im Gerät gemäß der GB—A—2 097 534 enthält die Wandleranordnung eine Vielzahl von Wandlern, die entlang eines in der Abtastebene liegenden Kreises, der mit der Rotationsachse konzentrisch ist, gleichmäßig voneinander beabstandet, angeordnet sind. Alle diese Wandler haben die gleiche relative Lage in bezug auf einen Radius, der sich in einem in der Abtastebene liegenden Querschnitt vom Mittelpunkt der Rotationsachse zum Mittelpunkt der Abstrahlfläche des jeweiligen Wandlers erstreckt. Bei jeder mit einem dieser Wandler durchgeführten Abtastung hat daher der jeweilige Wandler die gleiche relative Lage in bezug auf den untersuchten Körper. Gerade diese Eigenschaft macht die in der GB—A—2 097 534 beschriebene Wandleranordnung zur Durchführung eines Compound-Scan-Verfahrens ungeeignet, denn dafür ist der untersuchte Körper aus verschiedenen Blickwinkeln abzutasten, d.h. bei verschiedenen Abtastungen müssen die Wandler verschiedene relative Lagen in bezug auf den untersuchten Körper haben. In der klassischen Compound-Scan-Technik wird dies dadurch erzielt, daß die Lage des Wandlers in bezug auf den untersuchten Körper von einer Sektorabtastung zur nächsten manuell geändert wird.

Das Gerät gemäß der DE—A—27 19 130 enthält einen länglichen, drehbaren Schallkopf, an dem mehrere Schwinger in Richtung der Längsachse versetzt (z.B. auf einer Schraubenlinie) angeordnet sind, so daß die Schwingerachsen bei Drehbewegung des Schallkopfes in verschiedenen Ebenen ein Volumen des

2

untersuchten Körper bestreichen. Dabei können die Schwinger Einzelschwinger oder eine Gruppe von gleichzeitig aktivierbaren Wandlerelementen eines Multi-Element-Schwingers sein.

In der DE—A—27 19 130 sind keine Mittel zur Durchführung von wenigstens zwei verschiedenen, sich teilweise überdeckenden Abtastungen des untersuchten Körpers in einer Abtastebene beschrieben. Solche Abtastungen sind jedoch zur Durchführung eines Compound-Scan-Verfahrens notwendig.

Der Hauptvorteil der Echtzeitverfahren ist die relativ kurze Untersuchungszeit bei vergleichbar gutem Auflösungsvermögen und ausreichender Grauabstufung sowie die Tatsache, daß infolge der relativ hohen Bildfolgefrequenz es möglich ist, Bewegungsabläufe in Echtzeit darzustellen, d.h. Bewegungsvorgänge können direkt während der Untersuchung beobachtet werden. Weitere Vorteile der Echtzeitverfahren sind die exakte Reproduzierbarkeit der Bilder (d.h. die Bildqualität ist von der manuellen Geschicklichkeit verschiedener Untersucher wenig abhängig), die geringeren Gerätekosten und die einfachere Bedienung der Geräte.

Ein wichtiger Nachteil der Echtzeitverfahren im Vergleich mit den Compound-Scan-Verfahren ist darin zu sehen, daß die Darstellung unterschiedlicher weicher Teile weniger gut ist. Einerseits sind die Grautonunterschiede infolge einer stärkeren Granularität der Bilder weniger deutlich sichtbar, andererseits ist die Abbildung von Gewebe- und Organgrenzen weniger gut, weil bei den Echtzeitverfahren die Möglichkeit, einen abzubildenden Gegenstand von verschiedenen Richtungen mit Ultraschallwellerimpulse zu bestrahlen, nicht vorhanden ist.

Insbesondere für die medizinische Ultraschalldiagnostik ist allerdings das Bedürfnis vorhanden, über ein Verfahren bzw. eine Vorrichtung verfügen zu können, mit denen die Vorteile der beiden oben erwähnten Abtastverfahren erzielt werden können, ohne jedoch die Nachteile dieser Verfahren in Kauf nehmen zu müssen.

Der Erfindung liegt die Aufgabe zugrunde, eine Ultraschall-Wandleranordnung für ein Ultraschall-Bildgerät und ein Ultraschall-Bildgerät zu schaffen, mit denen soweit wie möglich die Vorteile sowohl des Compound-Scan-Verfahrens als auch des Echtzeitverfahrens erzielt werden können, wobei jedoch die Nachteile dieser beiden Verfahren weitgehend vermieden werden können.

Diese Aufgabe wird in einer ersten Ausführungsform durch die kennzeichnenden Merkmale des Patentanspruchs 1 gelöst und in einer zweiten Ausführungsform durch die kennzeichnenden Merkmale des Patentanspruchs 2, sowie für ein Ultraschall-Bildgerät durch den Patentanspruch 10. Zweckmäßige Ausgestaltungen der beiden Ausführungsformen der Ultraschall-Wandleranordnung sind in den abhängigen Ansprüchen 3 bis 9 gekennzeichnet.

Mit den erfindungsgemäßen Ultraschall-Wandleranordnungen bzw. mit dem erfindungsgemäßen Ultraschall-Bildgerät ist es möglich geworden, bei der Erzeugung eines Ultraschall-Querschnittbildes eines Körpers weitgehend die oben erwähnten Vorteile des klassischen Compound-Scan-Verfahrens und der sogenannten Echtzeitverfahren zu erzielen, ohne die oben erwähten Nachteile beider Verfahren in Kauf nehmen zu müssen. Die mit der Erfindung erzielten Vorteile sind wie folgt:

Die erzeugten Ultraschallbilder haben eine geringe Granularität ("speckle noise"), so daß Grautonunterschiede zwischen ähnlichen Geweben darin besser erkennbar sind.

Gewebe- und Organgrenzen sind in den erzeugten Bildern deutlich erkennbar.

Da das erfindungsgemäße Verfahren mit einem Wandler durchführbar ist, der sehr nahe an einem untersuchten Körper angeordnet werden kann und eine relativ schnelle Rotationsbewegung ausführen kann, ist es möglich, eine relativ hohe Bildfolgefrequenz zu erzielen und dadurch Bewegungsabläufe in Echtzeit darzustellen.

Durch die relativ hohe Bildfolgefrequenz, die erzielt wird, wird die Bildqualität durch Organbewegungen während des Abtastvorgangs nicht beeinträchtigt.

Der Anwendungsbereich der Erfindung ist sehr breit.

Durch geeignete Wahl und Einsatz einer für die spezifische Anwendung geeigneten Wandlereinrichtung können z.B. verschiedene Körperteile eines Patienten untersucht werden. Besonders vorteilhaft ist die Anwendung der Erfindung für eine Echtzeit-Ultraschalldiagnostik der Abdominalorgane. Aufgrund der mit der Erfindung erzielten Werte der Bildfrequenz ist sie auch für Herzuntersuchungen geeignet.

Die erzeugten Bilder zeichnen sich durch eine sehr gute Reproduzierbarkeit aus, d.h. die erzielte Bildqualität ist von der manuellen Geschicklichkeit des Untersuchers wenig abhängig.

Die Breite des Abtastbereichs an und in der Nähe der Hautoberfläche ist größer als bei einem Sektor-Scan.

Die Durchführung des erfindungsgemäßen Verfahrens ist relativ einfach, und die dafür erforderliche Untersuchungszeit ist sehr kurz.

Die Merkmale und Vorteile der Erfindung gehen aus der folgenden, anhand der beiliegenden Zeichnungen vorgenommenen Beschreibung von Ausführungsbeispielen hervor. Es zeigen

Fig. 1 ein Blockdiagramm eines erfindungsgemässen Geräts,

Fig. 2—9 schematische Darstellungen einiger Ausführungsformen der Ultraschall-Wandleranordnung in Fig. 1,

Fig. 10—12 einige Ausführungsformen der Wandler in Fig. 1—9,

Fig. 13—14 die Verwendung eines erfindungsgemässen Geräts und der dazugehörigen Ultraschall-Abtastvorrichtung zur Untersuchung eines Patienten.

3

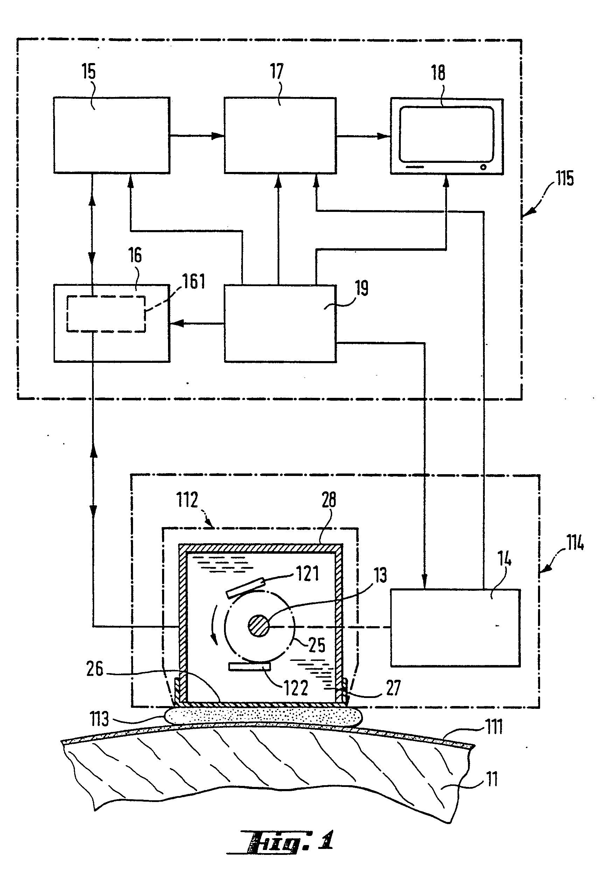

In Fig. 1 ist ein Ultraschall-Bildgerät zur Durchführung des erfindungsgemässen Verfahrens schematisch durch ein Blockdiagramm dargestellt. Dieses Gerät enthält eine Ultraschall-Abtastvorrichtung 114 und eine Signalverarbeitungseinheit 115.

Die Ultraschall-Abtastvorrichtung 114 enthält eine Ultraschall-Wandlereinrichtung 112 und eine Antriebsvorrichtung 14.

Die in Fig. 1 dargestellte Signalverarbeitungseinheit 115 enthält eine Sender-Empfänger-Vorrichtung 15, eine Wandler-Anschlussvorrichtung 16, eine Bildsignalaufbereitungseinheit 17, einen Fernsehmonitor 18, der zur Anzeige der Ultraschallbilder dient, und eine Steuereinheit 19.

Wie in Figur 1 gezeigt, enthält die Wandlereinrichtung 112 eine einzige Ultraschall-Wandleranordnung, die z.B. zwei auf einem Träger 25 angeordneten Wandler 121, 122 enthält, um eine zur Abtastebene senkrechte Rotationsachse 13 drehbar ist, und die in einem durch ein Gehäuse 28 und eine für Ultraschall durchlässige, z.B. aus Kunststoff bestehende Membrane 26 gebildeten Behälter enthalten ist. Dieser Behälter ist mit einer Uebertragungsflüssigkeit 27 gefüllt, z.B. mit Rizinusöl. Wie aus Fig. 1 ersichtlich, sind die Querschnitte des Trägers 25 und der Rotationsachse 13 konzentrisch.

Jeder Wandler der Wandleranordnung ist vorzugsweise ein einfacher monolitischer Wandler, er kann aber auch ein segmentierter Wandler sein.

Wenn monolitische Wandler verwendet werden, kann die Abstrahlfläche jedes Wandlers z.B. kreisförmig oder ringförmig sein. Diese Abstrahlfläche kann eben sein oder eine Krümmung haben, die eine Fokussierung der Ultraschallwellen ermöglicht. Eine solche Krümmung kann z.B. sphärisch, hyperbolisch oder kegelförmig sein.

Wenn segmentierte Wandler oder entsprechende Anordnungen von Wandlerelementen verwendet werden, können diese verschiedene Gestalt haben:

Um eine sogenannte dynamische Fokussierung zu erzielen, ist es z.B. zweckmässig einen Wandler zu benutzen, der mehrere, konzentrische, ringförmige Anordnungen von Wandlerelementen enthält. Die Abstrahlfläche dieser Anordnung kann flach oder sphärisch oder kegelförmig sein.

Zur Verringerung der Seitenmaxima des Ultraschallfeldes ist es zweckmässig eine ringförmige Anordnung von Wandlerelementen zu benutzen. Die Abstrahlfläche dieser Anordnung kann flach, sphärisch oder kegelförmig sein.

Wenn man mit den Wandler einen Ultraschallstrahl erzeugen will, der in bezug auf den Wandler verschiebbar und/oder elektronisch fokussierbar ist, ist es zweckmässig eine längliche Anordnung von aneinander angrenzenden Wandlerelementen zu verwenden. Die Abstrahlfläche dieser Anordnung kann flach, sphärisch oder zylindrisch sein, oder im Querschnitt als eine V-förmige Linie erscheinen.

In einer bevorzugten Ausführungsform, die nachstehend näher beschrieben wird, enthält jeder der Wandler 121, 122 in Fig. 1 einen monolitischen Ultraschallschwinger.

Der Wandler bildet eine starre Einheit. Die Abstrahlfläche des Wandlers ist vorzugsweise sphärisch, sie kann aber auch zylindrisch oder eben sein.

Mit der Antriebsvorrichtung 14, die durch die Steuereinheit 19 gesteuert wird, ist eine Rotationsbewegung der Wandleranordnung durchführbar. Die Antriebsvorrichtung enthält einen Antriebsmotor und einen Winkelgeber. Der Winkelgeber liefert ein Signal, das der jeweiligen Stellung der Wandleranordnung entspricht, und das der Bildsignalaufbereitungseinheit 17 zugeführt wird. Der Aufbau der Antriebsvorrichtung kann jedoch einfacher sein, z.B. ohne Regelkreis aber mit einem einfachen Winkelgeber. Wenn für den Antrieb ein Schrittmotor verwendet wird, ist ein Winkelgeber nicht mehr erforderlich.

In der Sender-Empfänger-Vorrichtung 15 werden die Sendesignale für die Wandler der Wandleranordnung erzeugt, und die von den Wandlern gelieferten Echosignale zur Erzeugung von Bildsignalen verarbeitet.

Zwischen der Sender-Empfänger-Vorrichtung 15 und der Wandleranordnung ist die Wandler-Anschlussvorrichtung 16 eingeschaltet, die dazu dient, einzelne Wandler der Wandleranordnung mit der Sender-Empfänger-Vorrichtung 15 elektrisch zu verbinden.

Wenn die Wandleranordnung segmentierte Wandler enthält und es vorgesehen ist, die Wandlerelemente der Wandler gruppenweise zu verwenden, enthält die Wandler-Anschlussvorrichtung 16 eine Elementen-Auswahleinrichtung 161, die dazu dient, wenigstens zwei verschiedene Gruppen von aneinander angrenzenden Wandlerelementen des Wandlers auszuwählen und die Wandlerelemente jeder ausgewählten Gruppe mit der Sender-Empfänger-Vorrichtung 15 elektrisch zu verbinden. Vorzugsweise wählt die Elementen-Auswahleinrichtung 161 die Gruppen von Wandlerelementen so aus, dass die Gruppen gleich breit sind, und dass der Abstand zwischen den Mittelpunkten der Abstrahlflächen der wenigstens zwei verschiedenen Gruppen annähernd die Hälfte der Breite jeder Gruppe beträgt.

Durch die Abtastung des Körpers 11 mit wenigstens zwei verschiedenen Wandlern der Wandleranordnung, oder mit wenigstens zwei Wandlerelementen oder Gruppen von Wandlerelementen die zu verschiedenen Wandlern gehören, oder mit wenigstens zwei verschiedenen Gruppen von Wandlerelementen eines der Wandler werden Einzelbilder aufgenommen. Die Bildsignalaufbereitungseinheit 17 dient dazu, ein elektronisches Compounding, d.h. eine Zusammensetzung dieser Einzelbilder durchzuführen, um ein Compound-Bild zu erzeugen. Hierfür enthält die Einheit 17 Mittel zur Speicherung und Assoziation der von der Sender-Empfänger-Vorrichtung abgegebenen Bildsignale und Mittel, die eine Uebertragung der so erzeugten, den Compound-Bild entsprechenden Bildsignale auf den Fernsehmonitor 18 ermöglichen.

Auf Einzelheiten des Aufbaus und der Funktionsweise der Einheit 17 wird in der vorliegenden Beschreibung nicht eingegangen.

Mit dem Fernsehmonitor 18 wird ein Bild angezeigt, dass durch die oben erwähnte Zusammensetzung von Einzelbildern erzeugt wird.

Die Steuereinheit 19 steuert die Funktion der Antriebsvorrichtung 14, der Sender-Empfänger-Vorrichtung 15, der Wandler-Anschlussvorrichtung 16, der Bildsignalaufbereitungseinheit 17, und des Fernsehmonitors 18.

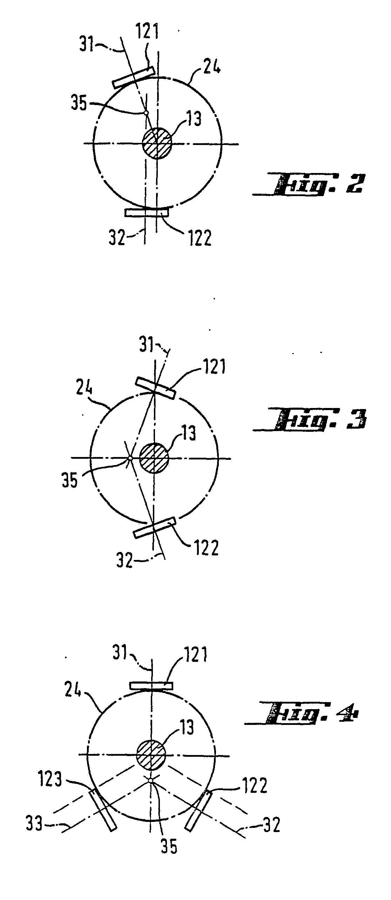

Fig. 2—9 zeigen schematisch in der Abtastebene liegende Querschnitte einiger Ausführungsformen der Wandleranordnung in Fig. 1. In jeder der Figuren 2-9 wird die Lage des Wandlerträgers 25 durch einen Kreis 24 angedeutet. Wie aus diesen Figuren ersichtlich, sind die Wandler entlang dieses Kreises und voneinander beabstandet angeordnet, und der Querschnitt von jedem Wandler in der Abtastebene hat eine Symmetrieachse, die senkrecht zur und durch den Mittelpunkt der Abstrahlfläche des Wandlers verläuft. Wie durch die Figuren 2—9 gezeigt, können die Wandler 121—124 in verschiedenen Positionen in bezug auf Symmetrieachsen des Trägers angeordnet sein.

Ein gemeinsames Merkmal der Wandleranordnungen gemäss Fig. 1—6 ist, dass die Symmetrieachsen 31—33 der Querschnitte von Wandlern, die entlang des Kreises 24 nacheinander angeordnet sind, sich in einem vom Mittelpunkt des Kreises 24 beabstandeten Punkt 35, 36 bzw. 37 schneiden.

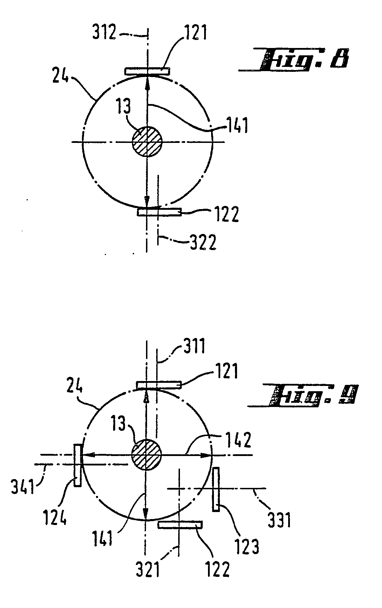

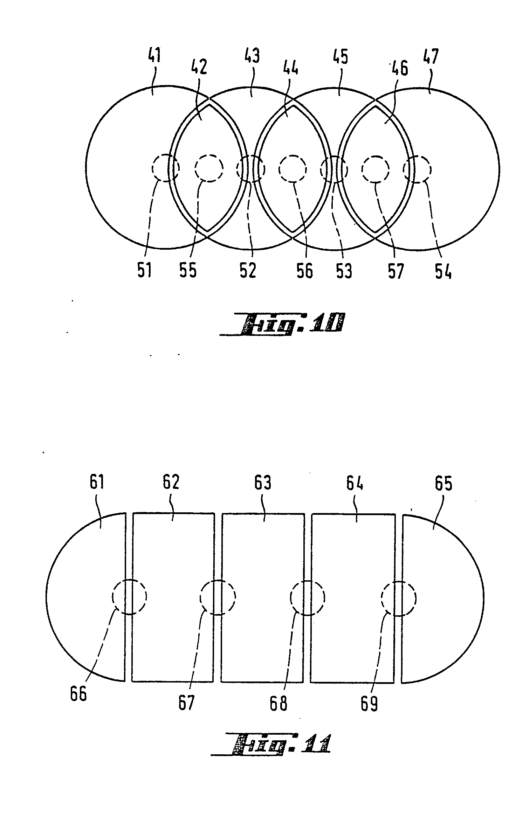

Ein gemeinsames Merkmal der Wandleranordnungen gemäss Fig. 7—9 ist, dass jede dieser Anordnungen wenigstens ein Paar von Wandlern 121, 122 bzw. 123, 124 enthält, die Wandler des wenigstens einen Paares an entgegengesetzten Enden eines Durchmessers 141 bzw. 142 des Kreises 24 angeordnet sind, und entweder die Symmetrieachsen 311, 321 bzw. 331, 341 der Querschnitte der beiden, ein Paar bildenden Wandler parallel zu und auf die gleiche Seite des Durchmessers 141 bzw. 142 verlaufen (siehe Fig. 7 und 9) oder die Symmetrieachse 312 von einem der Wandler mit dem Durchmesser 141 zusammenfällt und die Symmetrieachse 322 vom anderen Wandler parallel zum Durchmesser 141 verlauft (siehe Fig. 8).

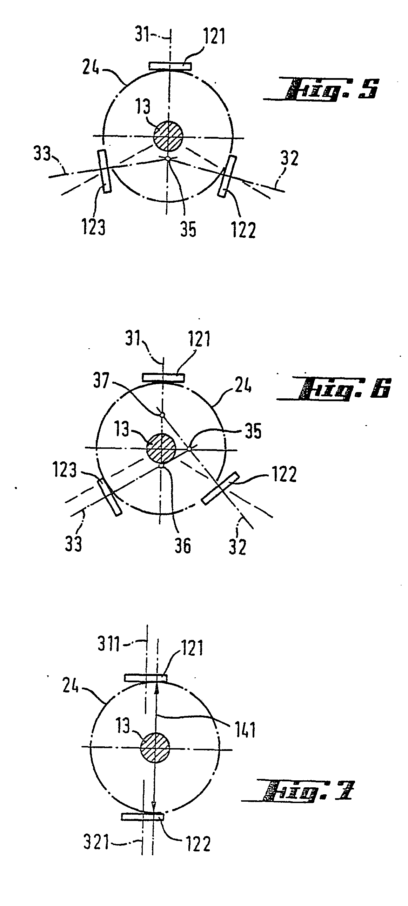

In den Wandleranordnungen gemäss den Figuren 3 und 5 sind die Wandler entlang des Kreises voneinander gleichmässig beabstandet. In den Wandleranordnungen gemäss den Figuren 2, 4, 6—9 hingegen sind die Wandler voneinander nur annähernd gleichmässig beabstandet.

Vorzugsweise sind die Abstrahlflächen aller Wandler der Wandleranordnungen gemäss den Fig. 1—9 gleich breit. Wenn man eine solche Wandleranordnung verwendet, ist es ausserdem von Vorteil die Anordnung der einzelnen Wandler entlang des Kreises 24 (in Fig. 2—9) so zu wählen, dass die Wandler in bezug auf den untersuchten Körper verschiedene Lagen einnehmen, wenn jeder Wandler durch die Rotation der Wandlereinrichtung zu einer Position gelangt, bei der der Wandler zwischen dem Mittelpunkt des Kreises 24 und dem untersuchten Körper liegt und die Symmetrieachse seines Querschnitts in der Abtastebene senkrecht zur Kontaktfläche der Wandlereinrichtung mit dem untersuchten Körper gerichtet ist, und dass der Abstand zwischen den Positionen, die die Mittelpunkte der Abstrahlflächen von benachbarten Wandlern in den oben erwähnten, verschiedenen Lagen einnehmen, annähernd die Hälfte der Breite der Abstrahlfläche eines der Wandler beträgt. Dies wird z.B. mit den Wandleranordnungen gemäss Figuren 7 und 9 erzielt.

In der soeben beschriebenen Ausführungsform der Wandleranordnung kann die Abstrahlfläche der einzelnen Wandler sphärisch, zylindrisch, konisch oder eben sein.

Wie nachstehend anhand der Figuren 10—12 erläutert, kann jeder der Wandler (z.B. 121, 122 in Fig. 1) der Wandleranordnung in aneinander angrenzende Wandlerelemente segmentiert sein und eine starre Einheit bilden. Die Segmentierung des Wandlers kann durch eine Segmentierung seiner Erregungselektroden erzielt werden. Durch die Wahl der Form dieser Elektroden können die Abstrahlflächen der Wandlerelemente verschiedene Formen haben. In den Figuren 10—12 sind Ausführungsformen der Wandler 121 bzw. 122 mit unterschiedlichen Segmentierungen in Wandlerelementen schematisch dargestellt.

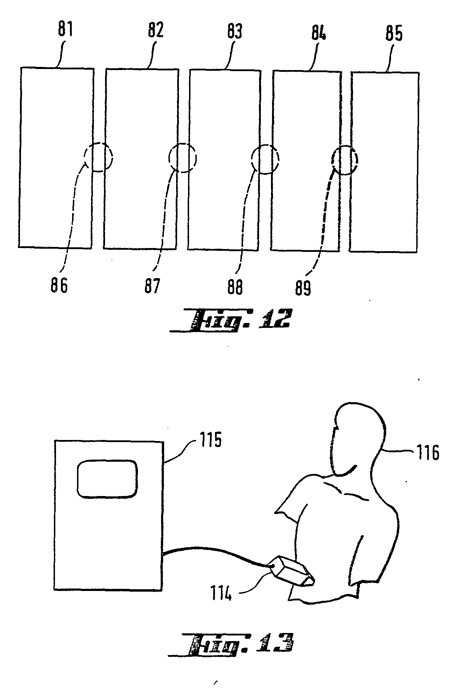

In der Ausführungsform gemäss Fig. 10 setzt sich die von den Elektroden des Wandlers gedeckte Fläche aus Kreisflächensegmenten zusammen. Damit wird die in Fig. 10 dargestellten Segmentierung des Wandlers in Wandlerelemente 41—47 erzielt. Auf ähnlicher Weise wird in den Ausführungsformen gemäss Fig. 11 und 12 die dort gezeigten Segmentierungen des Wandlers in Wandlerelementen 61—65 bzw. 81—85 erzielt.

Zur Fokussierung des Ultraschall-Strahlenbündels, das mit dem in Fig. 10, 11 oder 12 gezeigten Wandler erzeugbar ist, bzw. der entsprechenden Empfangscharakteristik, ist es zweckmäßig, anstelle von oder zusätzlich zu einer Krümmung seiner Abstrahlfläche, unterschiedliche Verzögerungen der Sende- bzw. Echosignale für die bzw. von den einzelnen Wandlerelementen vorzusehen.

Durch die Verwendung verschiedener, mit den Wandlerelementen gebildeter Gruppen können verschiedene Ultraschall-Strahlenbündel erzeugt werden.

In Fig. 10 ist durch je einen der kleinen Kreise 51—57 ein Symmetriezentrum des Querschnitts eines mit einer Gruppe von Wandlerelementen erzeugten Ultraschall-Strahlenbündels dargestellt. Zur Erzeugung eines Compound-Bildes mit dem Wandler gemäss Fig 10 können folgende Gruppen von Wandlerelementen verwendet werden:

EP 0 176 878 B1

| Gruppe | Wandlerelemente | Symmetriezentrum |
|--------|-----------------|------------------|
| 1 | 41, 42 | 51 |
| 2 | 42, 43, 44 | 52 |
| 3 | 44, 45, 46 | 53 |
| 4 | 46, 47 | 54 |
| 5 | 41, 42, 43, 44 | 55 |
| 6 | 42, 43, 44, 45, 46 | 56 |
| 7 | 44, 45, 46, 47 | 57 |
| 8 | 41, 42, 43, 44, 45, 46 | 52 |
| 9 | 42, 43, 44, 45, 46, 47 | 53 |
| 10 | 41, 42, 43, 44, 45, 46, 47 | 56 |

Durch Abtastung eines Körpers mit Kombinationen der Gruppen 1 bis 10 können Einzelbilder verschiedener Granularität erzeugt werden. Durch elektronische Zusammensetzung mehrerer dieser Einzelbilder kann ein Compound-Bild erzeugt werden, in dem die Organ- und Gewebegrenzen deutlicher sichtbar sind, als in den Einzelbildern.

Der Wandler hat in der Ausführungsform gemäss Fig. 11 die Wandlerelemente 61—65. In Fig. 11 ist durch je einen kleinen Kreis 66—69 annähernd das Symmetriezentrum des Querschnitts eines Ultraschall-Strahlenbündels dargestellt, das mit einer Gruppe von zwei benachbarten Wandlerelementen erzeugbar ist. Analog wie mit dem Wandler gemäss Fig. 10 können auch mit der Ausführungsform gemäss Fig. 11 für ein Compounding höherer Ordnung Kombinationen folgender Gruppen von Wandlerelementen zur Erzeugung eines Compound-Bildes verwendet werden:

| Gruppe | Wandlerelemente |
|--------|-----------------|
| 1 | 61, 62, 63 |
| 2 | 62, 63, 64 |
| 3 | 63, 64, 65 |
| 4 | 61, 62, 63, 64 |
| 5 | 62, 63, 64, 65 |
| 6 | 61, 62, 63, 64, 65 |

Die obigen Angaben in bezug auf die Ausführungsformen gemäss Figuren 10 und 11 gelten analog für die Ausführungsform des Wandlers gemäss Fig. 12, die Wandlerelemente 81—85 besitzt. In Figur 12 stellt jedes der kleinen Kreise 86—89 ein Symmetriezentrum.

Wenn das oben beschriebene Gerät z.B. mit einem Wandler gemäss Fig. 12 arbeitet, ist es zur Erzielung einer guten Querauflösung von Vorteil wenn die Elementen-Auswahleinrichtung 161 so gesteuert wird, dass diese die Gruppen von Wandlerelementen so wählt, dass ihre Abstrahlflächen solche symmetrische Konfigurationen bilden, dass die Symmetrieachsen der Abstrahlflächen der einzelnen Gruppen entweder in den Lücken zwischen zwei benachbarten Wandlerelementen oder in der Mitte der Abstrahlfläche eines Wandlerelements zu liegen kommen. Es ist bei einer solchen Ausführungsform vorteilhaft, die Elementen-Auswahleinrichtung so einzurichten, dass sie die Gruppen von Wandlerelementen so wählt, dass während eines ganzen Arbeitszykluses die Symmetrieachsen der Abstrahlflächen der ausgewählten Gruppen jede mögliche Position in den Lücken zwischen zwei benachbarten Wandlerelementen bzw. in der Mitte eines Wandlerelements mindestens einmal einnehmen, wobei gegebenenfalls nur die Wandlerelemente der ersten Hälfte der ersten und der zweiten Hälfte der letzten Wandlergruppe des Wandlers ausgenommen werden.

In einer bevorzugten Ausführungsform ist die Elementen-Auswahleinrichtung 161 so eingerichtet, dass sie während der Abtastung mit einem der Wandler wenigstens ein Paar voneinander verschiedener Gruppen von Wandlerelementen des Wandlers abwechselnd mit der Sender-Empfänger-Vorrichtung 15 verbindet.

Zur Durchführung eines erfindungsgemässen Verfahrens, z.B. zur Erzeugung eines Ultraschall-Querschnittbildes, z.B. von einem Teil des Körpers eines Patienten, wird das anhand der Figuren 1—12 beschriebene Gerät wie folgt benutzt:

Wie in Fig. 1 gezeigt, wird die Wandlereinrichtung 112 auf die Haut 111 des zu untersuchenden Körperteils 11 aufgesetzt, wobei ein Uebertragungsgel 113 zwischen der Membran 26 der Wandlereinrichtung und die Haut des Patienten gebracht wird. Das Gerät wird dann so betrieben, dass die Wandleranordnung zur Abtastung des Körpers eine Rotationsbewegung um die Achse 13 ausführt, wobei sie sich kontinuierlich bewegt.

Zur Durchführung des erfindungsgemässen Verfahrens mit einer Wandleranordnung die monolithische Wandler enthält, werden wenigstens zwei Sektorabtastungen durchgeführt, die sich nur teilweise überdecken. Wenn eine Wandleranordnung gemäss Fig. 2, 3, 7 oder 8 verwendet wird, wird z.B. eine der Sektorabtastungen mit dem Wandler 121 und die andere mit dem Wandler 122 durchgeführt. Mit den Wandleranordnungen gemäss Fig. 4—6 oder 9, die 3 bzw. 4 Wandler enthalten können selbstverständlich weitere solche Abtastungen durchgeführt werden. Bei jeder dieser Abtastungen wird der jeweils benutzte Wandler sowohl für die Ausstrahlung von Ultraschallimpulsen wie für den Empfang von Echowellen verwendet. Die soeben erwähnte Ausstrahlung von Ultraschallimpulsen und der Empfang der Echowellen finden während der Rotation der Wandleranordnung statt. Bei allen auf diese Weise durchgeführten Abtastungen des Körpers 11 bleibt die Position der Rotationsachse 13 in bezug auf den Körper 11 unverändert.

Wenn die Wandleranordnung segmentierte Wandler enthält, werden bei der Durchführung der Abtastungen vorzugsweise wenigstens zwei verschiedene, mittels der Elementen-Auswahleinrichtung 161 ausgewählte Gruppen von aneinander angrenzenden Wandlerelementen von jedem Wandler benutzt (z.B. die oben anhand der Fig. 10—12 beschriebenen Gruppen), wobei jede Gruppe sowohl für die Ausstrahlung von Ultraschallimpulsen wie auch für den Empfang von Echowellen verwendet wird.

Mit dem soeben beschriebenen Verfahren werden also wenigstens zwei verschiedene, sich teilweise überdeckende Sektorabtastungendes Körpers nach dem Impulsechoverfahren, in einer Abtastebene und mit einer einzigen Ultraschall-Wandlereinrichtung durchgeführt. Durch diese Sektorabtastungen werden also verschiedene Einzelbilder aufgenommen. Die Bildsignale, die jedem dieser Bilder entsprechen, werden mittels der Sender-Empfänger-Vorrichtung 15 aus den Echosignalen gewonnen und laufend in der Bildsignalaufbereitungseinheit 17 gespeichert. In dieser Einheit 17 findet laufend durch eine geeignete Verarbeitung der gespeicherten Bildsignale eine elektronische Zusammensetzung der verschiedenen, mit den Sektorabtastungen erzeugten Einzelbilder statt. Das Compound-Bild, das durch dieser Zusammensetzung erzeugt wird, wird mit dem Fernsehmonitor 18 angezeigt.

Bei der Durchführung des Verfahrens mit segmentierten Wandlern ist es zur Verringerung der Granularität (sogenannter "speckle noise") der damit erzeugten Ultraschallbilder vorteilhaft, dass die verwendeten Gruppen von Wandlerelementen gleich breit sind, und dass der Abstand zwischen den Mittelpunkten der Abstrahlflächen der Gruppen von Wandlerelementen, die für die Durchführung der wenigstens zwei verschiedenen Abtastungen verwendet werden, annähernd die Hälfte der Breite der Gruppe beträgt.

Zur Erhöhung der Zahl der Abtastlinien der Erzeugung der Querschnittsbilder ist es vorteilhaft, dass die Abstrahlflächen der Gruppen von Wandlerelementen in solche symmetrische Konfigurationen ausgebildet werden, dass die Symmetrieachsen der Abstrahlflächen der einzelnen Gruppen entweder in den Lücken zwischen zwei benachbarten Wandlerelementen oder in der Mitte der Abstrahlfläche eines Wandlerelements zum Liegen kommen.

Eine besonders hohe Zahl von Abtastlinien wird erzielt, wenn die Gruppen von Wandlerelementen so ausgewählt werden, dass während eines ganzen Abtastzykluses die Symmetrieachsen der Abstrahlflächen der ausgewählten Gruppen jede mögliche Position in den Lücken zwischen zwei benachbarten Wandlerelementen bzw. in der Mitte eines Wandlerelements mindestens einmal einnehmen, wobei gegebenenfalls nur die Wandlerelemente der ersten Hälfte der ersten und der zweiten Hälfte der letzten Wandlergruppe des Wandlers ausgenommen werden.

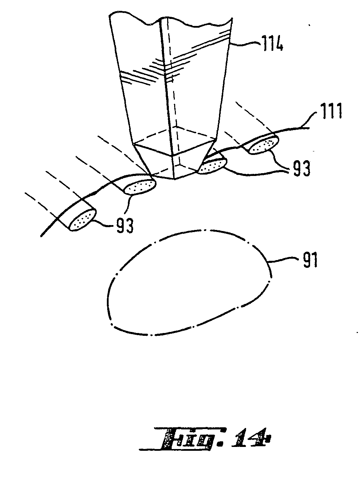

Die Verwendung des erfindungsgemässen Geräts zur Untersuchung eines Patienten wird nun anhand der Fig. 13 und 14 erläutert. In Fig. 13 wird die Anordnung der Abtastvorrichtung 114 in bezug auf den Körper 11 des Patienten dargestellt. Die andere Teile des Geräts sind in Fig. 13 durch den Block 115 dargestellt. Fig. 14 zeigt die Anordnung der Abtastvorrichtung 114 in bezug auf das Herz 91 und die Rippen 93 des Patienten bei einer Untersuchung des Herzens. Bei diesen Untersuchungen arbeitet die in der Wandlereinrichtung enthalten Wandleranordnung (in Fig. 13 und 14 nicht gezeigt) in der oben beschriebenen Weise; sie dreht um die Achse 13, sendet Ultraschallimpulse durch die Haut 111 des Patienten und empfängt Echowellen.

# EP 0 176 878 B1

**Patentansprüche**

1. Ultraschall-Wandleranordnung für ein Ultraschall-Bildgerät mit
einem um eine Rotationsachse (13) drehbaren Wandlerträger (25),
wenigstens zwei Ultraschall-Wandlern (121—123), die auf dem Wandlerträger in einer zur Rotationsachse senkrechten Ebene an voneinander beabstandeten Positionen entlang des Umfangs eines Kreises (24) um die Rotationsachse angeordnet sind und deren Querschnitt in dieser Ebene jeweils eine Symmetrieachse (31—33) hat, die in der Ebene liegt und senkrecht auf der Abstrahlfläche des betreffenden Wandlers steht,
einer Antriebsvorrichtung (14) zur Erzeugung einer Drehbewegung des Wandlerträgers um seine Rotationsachse, dadurch gekennzeichnet, daß
die Abstrahlflächen der Wandler (121—123) relativ zu der ihrer jeweiligen Position am Kreisumfang entsprechenden radialen Richtung jeweils unterschiedlich in solcher Weise ausgerichtet sind, daß sich die Symmetrieachsen (31—33) der Wandler in einem von der Rotationsachse (13) beabstandeten Punkt der Ebene schneiden.

2. Ultraschall-Wandleranordnung für ein Ultraschall-Bildgerät mit
einem um eine Rotationsachse drehbaren Wandlerträger (25),
wenigstens einem Paar von Ultraschall-Wandlern (121, 122; 123, 124), die auf dem Wandlerträger in einer zur Rotationsachse senkrechten Ebene an voneinander beabstandeten Positionen entlang des Umfangs eines Kreises (24) um die Rotationsachse angeordnet sind und deren Querschnitt in dieser Ebene jeweils eine Symmetrieachse (311, 321, 312, 322, 331, 341) hat, die in der Ebene liegt und senkrecht auf der Abstrahlfläche des betreffenden Wandlers steht,
einer Antriebsvorrichtung (14) zur Erzeugung einer Drehbewegung des Wandlerträgers um seine Rotationsachse, dadurch gekennzeichnet, daß
die Positionen der Wandler (121, 122; 123, 124) eines jeden Paares am Kreisumfang und die Ausrichtung ihrer Abstrahlflächen bezüglich der diesen Positionen entsprechenden radialen Richtungen so gewählt sind, daß
(i) entweder die Symmetrieachsen (311, 321; 331, 341) der beiden Wandler (121, 122; 123, 124) eines Paares parallel zu einem Durchmesser (141, 142) des Kreises und auf der gleichen Seite desselben verlaufen,
(ii) oder die Symmetrieachse (312) des einen Wandlers (121) eines Paares mit einem Durchmesser (141) des Kreises zusammenfällt, während die Symmetrieachse (322) des anderen Wandlers (122) des betreffenden Paares in einem vorgegebenen Abstand parallel zu diesem Durchmesser (141) verläuft.

3. Anordnung gemäß einem der Ansprüche 1 oder 2, dadurch gekennzeichnet, daß die Wandler (121—124) entlang des Kreises (24) annähernd gleichmäßig beabstandet sind.

4. Anordnung gemäß einem der Ansprüche 1 oder 2, dadurch gekennzeichnet, daß die Wandler (121—124) entlang des Kreises (24) gleichmäßig beabstandet sind.

5. Anordnung gemäß einem der Ansprüche 1 oder 2, dadurch gekennzeichnet, daß die Abstrahlflächen aller Wandler (121—124) gleich breit sind.

6. Anordnung gemäß Anspruch 5, dadurch gekennzeichnet, daß der Abstand zwischen den Positionen, die die Mittelpunkte der Abstrahlflächen von benachbarten Wandlern (121—124) jeweils dann einnehmen, wenn sich die Wandler in der jeweils gleichen Drehstellung befinden, annähernd die Hälfte der Breite der Abstrahlfläche eines der Wandler beträgt.

7. Anordnung gemäß einem der Ansprüche 1 oder 2, dadurch gekennzeichnet, daß die Abstrahlflächen der einzelnen Wandler (121—124) sphärisch, zylindrisch, konisch oder eben sind.

8. Anordnung gemäß einem der Ansprüche 1 oder 2, dadurch gekennzeichnet, daß wenigstens einer der Wandler in aneinander angrenzende Wandlerelemente (41—47; 61—65; 81—85) segmentiert ist.

9. Anordnung gemäß Anspruch 8, dadurch gekennzeichnet, daß die Abstrahlflächen der Wandlerelemente aus Kreisflächenteilen und/oder aus Rechteckflächen bestehen.

10. Ultraschallbildgerät zur Erzeugung eines zusammengesetzten Querschnittbildes eines Körpers nach dem Compound-Scan-Verfahren, welches mit einer Ultraschall-Wandleranordnung (114) gemäß einem der Ansprüche 1 bis 9 ausgestattet ist.

11. Gerät nach Anspruch 10 bei Verwendung einer Wandleranordnung nach Anspruch 8, dadurch gekennzeichnet, daß eine Elementen-Auswahleinrichtung (161) vorgesehen ist, welche dazu dient, wenigstens zwei verschiedene Gruppen von aneinander angrenzenden Wandlerelementen jedes Wandlers zum Senden und Empfangen von Ultraschallenergie auszuwählen.

12. Gerät gemäß Anspruch 11, dadurch gekennzeichnet, daß die Elementen-Auswahleinrichtung (161) die Gruppen von Wandlerelementen so wählt, daß die Abstrahlflächen der Gruppen gleich breit sind, und daß der Abstand zwischen den Mittelpunkten der Abstrahlflächen der wenigstens zwei verschiedenen Gruppen annähernd die Hälfte der Breite der Gruppe beträgt.

13. Gerät gemäß Anspruch 11, dadurch gekennzeichnet, daß die Elementen-Auswahleinrichtung (161) die Gruppen von Wandlerelementen so wählt, daß die Abstrahlflächen der Gruppen in solche symmetrische Konfigurationen ausgebildet werden, daß die Symmetriezentren der Abstrahlflächen der einzelnen Gruppen entweder in den Lücken zwischen den Abstrahlflächen benachbarter Wandlerelemente oder in der Mitte der Abstrahlfläche eines Wandlerelements zu liegen kommen.

14. Gerät gemäß Anspruch 13, dadurch gekennzeichnet, daß die Elementen-Auswahleinrichtung (161) die Gruppen von Wandlerelementen so wählt, daß während einer Folge von Sektorabtastungen die Symmetriezentren der Abstrahlflächen der ausgewählten Gruppen jede mögliche Position in den Lücken zwischen den Abstrahlflächen benachbarter Wandlerelemente bzw. in der Mitte der Abstrahlfläche eines Wandlerelements mindestens einmal einnehmen, wobei dies nicht für die Wandlerelemente der ersten Hälfte der ersten und der zweiten Hälfte der letzten Wandlergruppe des Wandlers gilt.

**Revendications**

1. Dispositif transducteur ultrasonique destiné à un dispositif d'imagerie ultrasonique comportant un support de transducteur, tournant autour d'un axe de rotation (13),
au moins deux transducteurs ultrasoniques (121 à 123) qui sont disposés sur le support de transducteurs dans un plan perpendiculaire à l'axe de rotation, à des positions espacées l'une de l'autre le long de la périphérie d'un cercle (24) autour de l'axe de rotation, et dont la coupe possède respectivement dans ce plan un axe de symétrie (31—33) qui est situé dans le plan et qui est perpendiculaire à la surface d'émission du transducteur correspondant,
un dispositif d'entraînement (14) pour communiquer un mouvement de rotation au support de transducteurs autour de son axe de rotation, caractérisé en ce que
les surfaces d'émission des transducteurs (121 à 123) sont orientées respectivement de façons différentes par rapport à la direction radiale correspondant à leur position respective sur la périphérie du cercle, de telle sorte que les axes de symétrie (31 à 33) des transducteurs se coupent en un point du plan situé à distance de l'axe de rotation (13).

2. Dispositif de transducteurs ultrasoniques destiné à un dispositif d'imagerie ultrasonique comportant un support de transducteurs (25) tournant autour d'un axe de rotation,
au moins une paire de transducteurs ultrasoniques (121; 122; 123, 124), qui sont disposés sur le support de transducteurs dans un plan perpendiculaire à l'axe de rotation, à des positions espacées l'une de l'autre le long de la périphérie d'un cercle (24) autour de l'axe de rotation, et dont la coupe possède respectivement dans ce plan un axe de symétrie (311, 321, 312, 322, 331, 341) qui est situé dans le plan et qui est perpendiculaire à la surface d'émission du transducteur correspondant,
un dispositif d'entraînement (14) pour communiquer un mouvement de rotation au support de transducteurs autour de son axe de rotation, caractérisé en ce que
les positions des transducteurs (121, 122; 123, 124) de chaque paire sur la périphérie circulaire et l'orientation de leur surface d'émission par rapport aux orientations radiales correspondant à ces positions sont choisies de telle façon que
(i) soit les axes de symétrie (311, 321; 331, 341) des deux transducteurs (121, 122; 123, 124) d'une paire sont de tracé parallèle à un diamètre (141, 142) du cercle et sont situés sur le même côté,
(ii) soit l'axe de symétrie (312) de l'un des transducteurs (121) d'une paire coïncide avec un diamètre (141) du cercle, alors que l'axe de symétrie (322) de l'autre transducteur (122) de la paire considérée est de tracé parallèle à ce diamètre (141) à une certaine distance.

3. Dispositif selon l'une des revendications 1 ou 2, caractérisé en ce que les transducteurs (121 à 124) sont à peu près équidistants le long du cercle (24).

4. Dispositif selon l'une des revendications 1 ou 2, caractérisé en ce que les transducteurs (121 à 124) sont équidistants le long du cercle (24).

5. Dispositif selon l'une des revendications 1 ou 2, caractérisé en ce que les surfaces d'émission de tous les transducteurs (121 à 124) sont de même largeur.

6. Dispositif selon la revendication 5, caractérisé en ce que la distance entre les positions que prennent respectivement les points centraux des surfaces d'émission de transducteurs voisins (121 à 124), lorsque les transducteurs se trouvent respectivement dans la même position de rotation, est à peu près égale à la moitié de la largeur de la surface d'émission de l'un des transducteurs.

7. Dispositif selon la revendication 1 ou 2, caractérisé en ce que les surfaces d'émission des transducteurs individuels (121 à 124) sont sphériques, cylindriques, coniques, ou plates.

8. Dispositif selon l'une des revendications 1 ou 2, caractérisé en ce qu'au moins l'un des transducteurs est segmenté en éléments de transducteurs (41 à 47; 61 à 65; 81 à 85) adjacents les uns aux autres.

9. Dispositif selon la revendication 8, caractérisé en ce que les surfaces d'émission des éléments de transducteurs se composent de parties de surface circulaires et/ou de surfaces rectangulaires.

10. Dispositif d'imagerie ultrasonique destiné à engendrer une image composée, en coupe, d'un corps selon le procédé à exploration composée (ou Compound-Scan) qui est équipé d'un dispositif de transducteurs ultrasoniques (114) selon l'une des revendications 1 à 9.

11. Dispositif selon la revendication 10 utilisant un dispositif de transducteurs selon la revendication 8, caractérisé en ce qu'il existe un dispositif (161) de choix des éléments qui sert à choisir au moins deux groupes différents d'éléments de transducteurs adjacents les uns aux autres de chaque transducteur pour envoyer et recevoir une énergie ultrasonique.

12. Dispositif selon la revendication 11, caractérisé en ce que le dispositif (161) de choix d'éléments choisit les groupes d'éléments de transducteurs de telle façon que les surfaces d'émission des groupes soient de même largeur, et que la distance entre les points centraux des surfaces d'émission des au moins deux groupes différents soit voisine de la moitié de la largeur du groupe.

13. Dispositif selon la revendication 11, caractérisé en ce que le dispositif (161) de choix des éléments choisit les groupes d'éléments de transducteurs de telle façon que les surfaces d'émission des groupes soient formées selon des configurations symétriques telles que les centres de symétrie des surfaces d'émission des différents groupes viennent se placer soit dens les intervalles entre les surfaces d'émission d'éléments de transducteurs voisins, soit au milieu de la surface d'émission d'un élément de transducteur.

14. Dispositif selon la revendication 13, caractérisé en ce que le dispositif (161) de choix d'éléments choisit les groupes d'éléments de transducteurs de telle façon que, pendant une séquence d'explorations de secteurs, les centres de symétrie des surfaces d'émission des groupes choisis prennent au moins une fois chaque position possible dans les intervalles entre les surfaces d'émission d'éléments transducteurs voisins ou au centre de la surface d'émission d'un élément transducteur, ceci n'étant pas valable pour les éléments transducteurs de la première moitié du premier groupe de transducteurs et de la deuxième moitié du dernier groupe du transducteurs.

## Claims

1. An ultrasonic transducer arrangement for an ultrasonic imaging device comprising
a transducer support (25) rotatable about a rotational axis (13),
at least two ultrasonic transducers (121—123) disposed on transducer support in a plane perpendicular to the rotational axis at spaced positions along the circumference of a circle (24) around the rotational axis, and the cross-section of which in this plane has in each case an axis of symmetry (31—33) situated in the plane and perpendicular to the radiation surface of the associated transducer,
a drive means (14) for producing a rotary movement of the transducer support about its rotational axis, characterised in that
the radiation surfaces of the tranducers (121—123) are in each case differently aligned in relation to the radial direction corresponding to their respective positions on the circumference of the circle, in such manner that the axes of symmetry (31—33) of the transducers intersect at a point of the plane at a distance from the rotational axis (13).

2. An ultrasonic transducer arrangement for an ultrasonic imaging device comprising:
a transducer support (25) rotatable about a rotational axis,
at least one pair of ultrasonic tranducers (121, 122; 123, 124) disposed on the transducer support in a plane perpendicular to the rotational axis at spaced positions along the circumference of a circle (24) around the rotational axis, and the cross-section of which in said plane has in each case an axis of symmetry (311, 321, 312, 322, 331, 341) which is situated in the plane and perpendicular to the radiation surface of the associated transducer,
a drive means (14) for producing a rotary movement of the transducer support about its rotational axis, characterised in that
the positions of the transducers (121, 122; 123, 124) of each pair on the circumference of the circle and the alignment of their radiation surfaces with respect to the radial directions corresponding to these positions are so selected that:
(i) either the axes of symmetry (311, 321; 331, 341) of the two transducers (121, 122; 123, 124) of a pair extend parallel to a diameter (141, 142) of the circle and on the same side thereof,
(ii) or the axis of symmetry (312) of one transducer (121) of a pair coincides with a diameter of (141) of the circle, while the axis of symmetry (322) of the other transducer (122) of the associated pair extends at a predetermined distance parallel to said diameter (141).

3. An arrangement according to either of claims 1 or 2, characterised in that the transducers (121—124) are disposed with approximately uniform spacing along the circle (24).

4. An arrangement according to either of claims 1 or 2, characterised in that the transducers (121—124) are uniformly spaced along the circle (24).

5. An arrangement according to either of claims 1 or 2, characterised in that the radiation surfaces of all the transducers (121—124) are of the same width.

6. An arrangement according to claim 5, characterised in that the distance between the positions that the centre points of the radiation surfaces of adjacent transducers (121—124) respectively occupy when the transducers are in the respectively same rotary positions is approximately equal to half the width of the radiation surface of one of the transducers.

7. An arrangement according to either of claims 1 or 2, characterised in that the radiation surfaces of the individual transducers (121—124) are spherical, cylindrical, conical or flat.

8. An arrangement according to either of claims 1 or 2, characterised in that at least one of the transducers is segmented into adjoining transducer elements (41—47; 61—65; 81—85).

9. An arrangement according to claim 8, characterised in that the radiation surfaces of the transducer elements consist of circular surface parts and/or rectangular surfaces.

10. An ultrasonic imaging device for producing a compound cross-sectional image of a body by the compound scan process, such device being equipped with an ultrasonic transducer arrangement (114) according to any one of claims 1 to 9.

11. A device according to claim 10 using a transducer arrangment according to claim 8, characterised in that an element selector means (161) is provided, which serves to select at least two different groups of adjoining transducer elements of each transducer for transmitting and receiving ultrasonic energy.

12. A device according to claim 11, characterised in that the element selector means (161) so selects the groups of transducer elements that the radiation surfaces of the groups are of equal width, and in that the distance between the centres of the radiation surfaces of the at least two different groups is equal to approximately half the width of the group.

13. A device according to claim 11, characterised in that the element selector means (161) so selects the groups of transducer elements that the radiation surfaces of the groups are formed into symmetrical configurations such that the centres of symmetry of the radiation surfaces of the individual groups come to lie either in the gaps between the radiation surfaces of adjacent transducer elements or in the centre of the radiation surface of a transducer element.

14. A device according to claim 13, characterised in that the element selector means (161) so selects the groups of transducer elements that during a sequence of sector scans the centres of symmetry of the radiation surfaces of the selected groups occupy at least once each possible position in the gaps between the radiation surfaces of adjacent transducer elements or in the centre of the radiation surface of a transducer element, although this does not apply to the transducer elements of the first half of the first and of the second half of the last transducer group of the transducer.

**_Fig. 1_**

Fig. 2

Fig. 3

Fig. 4

Fig. 5

Fig. 6

Fig. 7

EP 0 176 878 B1

Fig. 8

Fig. 9

*Fig. 10*

*Fig. 11*

81    82    83    84    85

86    87    88    89

*Fig. 12*

115        116

114

*Fig. 13*

Fig. 14